# EUROPEAN PATENT APPLICATION

(11) **EP 3 517 759 A1**
(43) Date of publication of application: **31.07.2019**
(21) Application number: 18153472.8
(22) Date of filing: 25.01.2018
(51) Int. Cl.: F02C 9/40, F02C 3/20, F02C 3/30

(54) **GAS TURBINE PLANT AND METHOD FOR OPERATING A GAS TURBINE PLANT**

(71) Applicant: Siemens Aktiengesellschaft, 80333 München (DE)
(72) Inventor: Berg, Anton, 59034 Tjällmo (SE); Jaerling, Patrik, 58943 Linköping (SE)

(57) **Abstract**

The invention relates to a gas turbine plant (2a, 2b, 2c) comprising a combustion system (8), a gaseous fuel supply system (36) and a liquid fuel supply system (34), wherein the combustion system (8) exhibits a combustion chamber (16), a first injection device (18) for injecting liquid fuel (20) into the combustion chamber (16) and a second injection device (22) for injecting gaseous fuel (24) into the combustion chamber (16), and wherein the first injection device (18) is connected to the liquid fuel supply system (34) and the second injection device (22) is connected to the gaseous fuel supply system (36). In order to make it possible to increase the power output of the gas turbine plant (2a, 2b, 2c) with little effort while ensuring a low complexity of the gas turbine plant (2a, 2b, 2c), it is suggested that the gas turbine plant (2a, 2b, 2c) comprises an auxiliary medium supply system (48) which is connected to at least one of the two injection devices (18, 22). Moreover, the invention relates to a method for operating such a gas turbine plant (2a, 2b, 2c).

## Description

The present invention relates to a gas turbine plant comprising a combustion system, a gaseous fuel supply system and a liquid fuel supply system, wherein the combustion system exhibits a combustion chamber, a first injection device for injecting liquid fuel into the combustion chamber and a second injection device for injecting gaseous fuel into the combustion chamber, and wherein the first injection device is connected to the liquid fuel supply system and the second injection device is connected to the gaseous fuel supply system.

Gas turbine plants are frequently used to generate power. During operation of a gas turbine plant, the demand for power from the gas turbine plant can sometimes exceed the power being generated by the gas turbine plant.

One possibility to increase the power being generated by a gas turbine plant is to introduce an auxiliary medium into the combustion chamber of the gas turbine plant. Introducing an auxiliary medium into the combustion chamber results in an increased mass flow into the combustion chamber and, thus, in an increased mass flow into the expander of the gas turbine plant. Consequently, more power can be extracted from the expander. Additionally, introducing an auxiliary medium into the combustion chamber causes a reduction of the combustion temperature so that more fuel can be burned.

An objective of the present invention is to provide a gas turbine plant of the type mentioned above in which the power output can be increase in the aforementioned manner and which also exhibits a low complexity.

This objective is achieved, according to the invention, by a gas turbine plant having the features of claim 1.

The gas turbine plant according to the invention comprises a combustion system, a gaseous fuel supply system and a liquid fuel supply system, wherein the combustion system exhibits a combustion chamber, a first injection device for injecting liquid fuel into the combustion chamber and a second injection device for injecting gaseous fuel into the combustion chamber, and wherein the first injection device is connected to the liquid fuel supply system and the second injection device is connected to the gaseous fuel supply system. Furthermore, the gas turbine plant according to the invention comprises an auxiliary medium supply system which is connected to at least one of the two injection devices.

Preferred embodiments of the invention are subject of the dependent claims and of the following description.

The auxiliary medium supply system of the gas turbine plant can be employed for introducing an auxiliary medium into the combustion chamber, especially in order to increase the power being generated by the gas turbine plant.

Due to the fact that the auxiliary medium supply system is connected to at least one of the two injection devices, the gas turbine plant does not require a separate injection device for introducing the auxiliary medium into the combustion chamber. In this way, a low complexity of the gas turbine plant can be achieved.

The gas turbine plant according to the invention requires less components and less control effort as compared to a gas turbine plant which comprises a separate injection device (e.g. in a compressor of the gas turbine plant) for introducing the auxiliary medium into the combustion chamber.

Expediently, the gas turbine plant comprises an expander (also called turbine) and a compressor. The combustion system expediently comprises one or several burners for burning fuel.

Preferentially, the gas turbine plant can be operated in a first operating mode in which liquid fuel is burned by the combustion system ("liquid fuel mode") as well as in a second operating mode in which gaseous fuel is burned by the combustion system ("gaseous fuel mode"). The combustion system may thus be a so-called "dual fuel system".

In the first operating mode, liquid fuel is preferably injected into the combustion chamber by means of first injection device. In the second operating mode, gaseous fuel is preferably injected into the combustion chamber by means of second injection device.

Since injecting the auxiliary medium into the combustion chamber causes a reduction of the combustion temperature and, thus, a reduction in NO_{X} production, the combustion system of the gas turbine plant can be considered as a Low Emission System.

Preferentially, the liquid fuel supply system comprises a storage tank for storing liquid fuel. Expediently, liquid fuel which is to be injected into the combustion chamber is stored in the storage tank of the liquid fuel supply system.

In a preferred embodiment, the auxiliary medium supply system comprises a storage tank for storing the auxiliary medium. Expediently, the auxiliary medium which is to be injected into the combustion chamber is stored in this storage tank.

Furthermore, the gaseous fuel supply system may be connected/connectable to a gas grid, particularly to a high-pressure gas grid. Optionally, the gaseous fuel supply system can have a storage tank for storing gaseous fuel. This storage tank can be connected/connectable to a gas grid, particularly to a high-pressure gas grid.

The first injection device may comprise one or several fuel injection nozzles for injecting liquid fuel into the combustion chamber of the combustion systems. Further, the second injection device may comprise one or several fuel injection nozzles for injecting gaseous fuel into the combustion chamber of the combustion system.

Preferentially, the first injection device comprises several fuel injection nozzles for injecting liquid fuel into the combustion chamber and the second injection device comprises several fuel injection nozzles for injecting gaseous fuel into the combustion chamber. In this way, a homogeneous distribution of the respective type of fuel may be achieved within the combustion chamber, particularly if the fuel injection nozzles are arranged homogeneously.

The first injection device may comprise the same number of fuel injection nozzles as the second injection device. Alternately, the first injection device may comprise a larger or smaller number of fuel injection nozzles than the second injection device.

Expediently, the respective fuel injection nozzle of the first injection device is connected at its inlet side to the liquid fuel supply system and the respective fuel injection nozzle of the second injection device is connected at its inlet side to the gaseous fuel supply system.

The nozzle(s) of the first injection device can differ from the nozzle(s) of the second injection device, particularly with regard to their dimensions. For instance, the nozzle(s) of the first injection device may have a smaller diameter, especially a smaller nozzle outlet diameter, than the nozzle(s) of the second injection device, particularly due to the fact that liquid fuel typically has a significantly higher density than gaseous fuel.

The auxiliary medium supply system can be connected to the first injection device. Alternatively or additionally, the auxiliary medium supply system can be connected to the second injection device.

In particular, only one of the two aforementioned injection devices may be connected to the auxiliary medium supply system. Put differently, one of the two injection devices may be connected to the auxiliary medium supply system, while the other injection device is not connected to the auxiliary medium supply system.

Moreover, at least one of the aforementioned supply systems (i.e. the liquid fuel supply system, the gaseous fuel supply system and/or the auxiliary medium supply system) may comprise a filter for filtering impurities from the respective medium. Preferentially, such a filter is arranged upstream the first/second injection device.

Expediently, the liquid fuel supply system comprises a fluid line for conducting liquid fuel which is connected to the first injection device. The auxiliary medium supply system can comprise a fluid line which is connected to said fluid line of the liquid fuel supply system, particularly opens into said fluid line of the liquid fuel supply system.

Moreover, it is expedient if the gaseous fuel supply system comprises a fluid line for conducting gaseous fuel which is connected to the second injection device. The auxiliary medium supply system may comprise a fluid line which is connected to said fluid line of the gaseous fuel supply system, particularly opens into said fluid line of the gaseous fuel supply system.

Moreover, at least one of the two fuel supply systems (i.e. the liquid fuel supply system and/or the gaseous fuel supply system) may comprise a directional valve to which a fluid line of the auxiliary medium supply system is connected. Such a directional valve can be utilised to allow either the auxiliary medium or the respective type of fuel to flow to the first/second injection device.

Advantageously, the first injection device is arranged such that liquid fuel can be injected directly into the combustion chamber by the first injection device. In this case, the auxiliary medium as well can be injected directly into the combustion chamber by the first injection device if the auxiliary medium supply system is connected to the first injection device.

Furthermore, it is advantageous if the second injection device is arranged such that gaseous fuel can be injected directly into the combustion chamber by the second injection device. In this case, the auxiliary medium as well can be injected directly into the combustion chamber by the second injection device if the auxiliary medium supply system is connected to the second injection device.

The invention also relates to a method for operating a gas turbine plant of the type described above.

In the method according to the invention, fuel is injected into the combustion chamber by means of one of the two injection devices and said fuel is burned within the combustion chamber in order to generate power by the gas turbine plant. Moreover, the other injection device is supplied with an auxiliary medium by means of the auxiliary medium supply system and the auxiliary medium is injected into the combustion chamber by means of the latter injection device in order to increase the power being generated by the gas turbine plant.

This method constitutes a method which, with low technical effort and low cost expenditure, allows for increasing the power output of the gas turbine plant during operation of the gas turbine plant.

Advantageously, the injection device which is used to inject the auxiliary medium into the combustion chamber injects the auxiliary medium directly into the combustion chamber. In this manner, a particularly strong power increase can be achieved since essentially the entire auxiliary medium can serve as a part of the working fluid for driving the expander (unlike in the case in which the auxiliary medium is injected into the compressor and a part of the auxiliary medium is extracted from the compressor for cooling).

In an advantageous implementation, the fuel is injected into the combustion chamber by means of the second injection device and the auxiliary medium is injected into the combustion chamber by means of the first injection device. Expediently, the fuel is a gaseous fuel, such as natural gas, in this case. Hence, the power being generated by the gas turbine plant can be increased by injecting the auxiliary medium into the combustion chamber via the first injection device if the second injection device is employed for injecting fuel into the combustion chamber (i.e. if the gas turbine plant is operated in its "gaseous fuel mode").

Alternately, the fuel may be injected into the combustion chamber by means of the first injection device and the auxiliary medium may be injected into the combustion chamber by means of the second injection device. Expediently, the fuel is a liquid fuel, such as kerosene or diesel, in this case. Hence, the power being generated by the gas turbine plant can be increased by injecting the auxiliary medium into the combustion chamber via the second injection device if the first injection device is employed for injecting fuel into the combustion chamber (i.e. if the gas turbine plant is operated in its "liquid fuel mode").

The auxiliary medium can be injected into the combustion chamber in liquid state or in gaseous state. Preferably, the auxiliary medium is injected into the combustion chamber in gaseous state if the second injection device is employed for injecting the auxiliary medium into the combustion chamber.

In addition, the gas turbine plant may comprise an evaporator for converting the auxiliary medium from liquid state into gaseous state.

The auxiliary medium may, for instance, be water. An advantage of using water as the auxiliary medium is that water is available at comparatively low costs. Alternately, the auxiliary medium may be an inert gas, such as helium or nitrogen. Using an inert gas as the auxiliary medium has the advantage that an inert gas typically does not cause undesired chemical reactions.

The foregoing description of preferred embodiments of the invention contains numerous features which may be present in combination with one another in the dependent claims. Expediently, these features can also be considered individually and be combined with one another to achieve further suitable combinations. More particularly, these features can be combined with the gas turbine plant and the method according to the respective independent claim individually as well as in any suitable combination. Furthermore, features mentioned in connection with the method can be considered as features of the corresponding device and vice versa.

The above-described characteristics, features and advantages of the invention and the manner in which they are achieved can be understood more clearly in connection with the following description of exemplary embodiments of the invention which will be explained with reference to the drawings. The exemplary embodiments are intended to illustrate the invention, but are not supposed to restrict the scope of the invention to combinations of features given therein, neither with regard to functional features. Furthermore, suitable features of each of the exemplary embodiments can also be explicitly considered in isolation, be removed from one exemplary embodiment, be introduced into another exemplary embodiment for supplementation and/or be combined with any of the appended claims.

In the drawings:

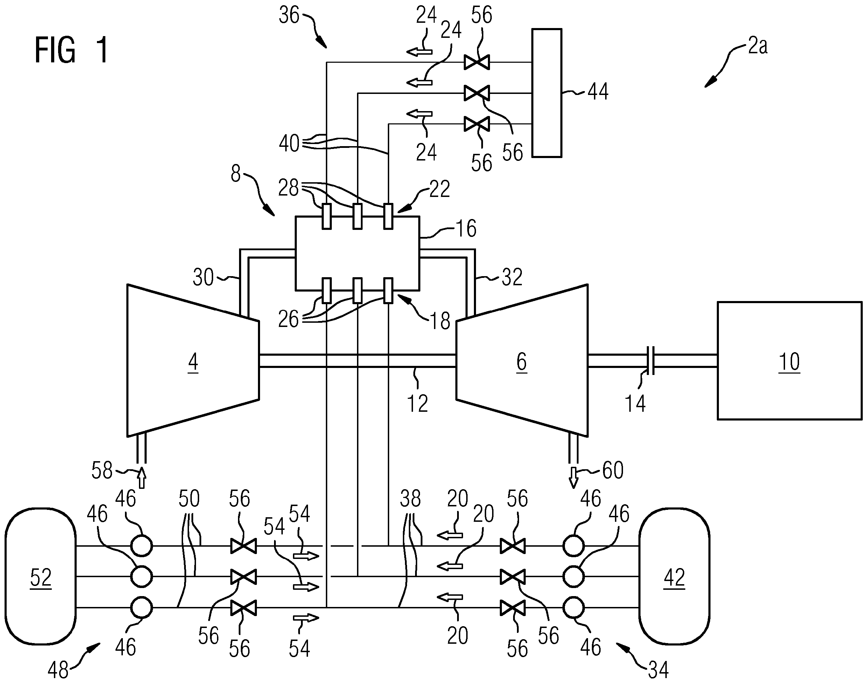

- FIG 1: is a schematic illustration of a first gas turbine plant comprising a liquid fuel supply system, a gaseous fuel supply system and an auxiliary medium supply system, wherein the auxiliary medium supply system comprises fluid lines which open into fluid lines of the liquid fuel supply system;

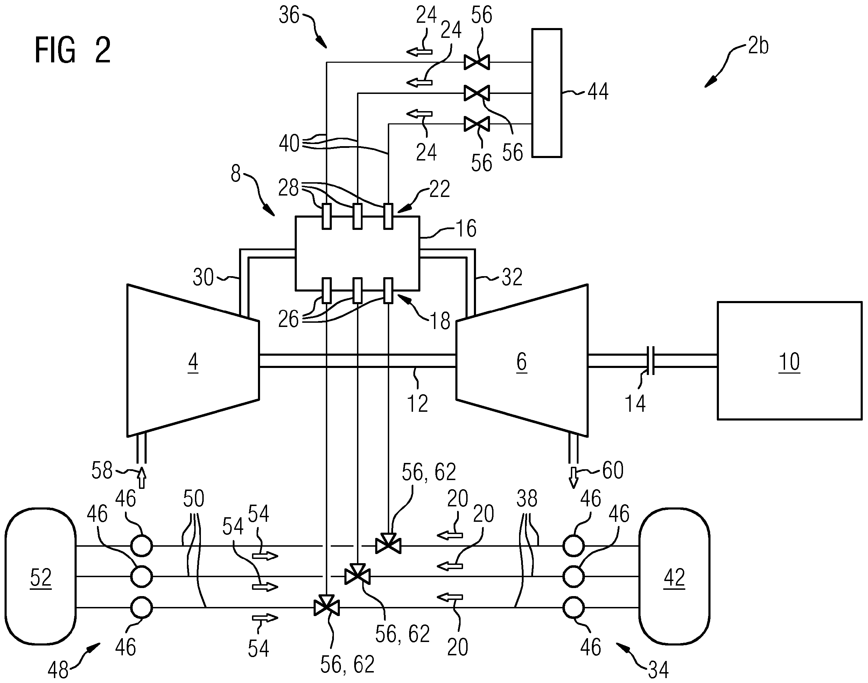

- FIG 2: is a schematic illustration of a second gas turbine plant comprising a liquid fuel supply system, a gaseous fuel supply system and an auxiliary medium supply system, wherein the auxiliary medium supply system comprises fluid lines which are connected to the liquid fuel supply system by means of directional valves;

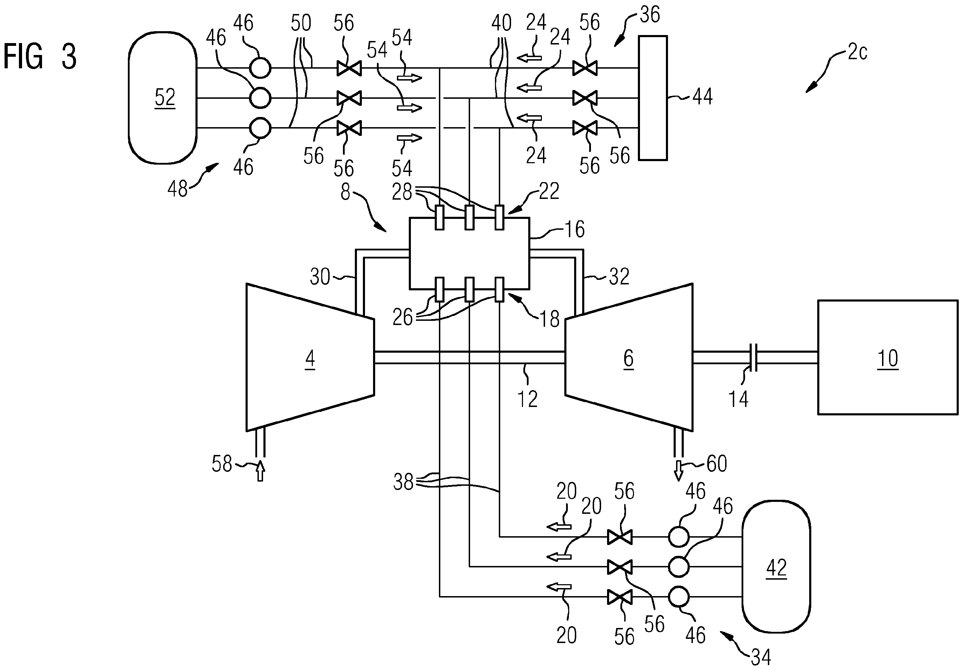

- FIG 3: is a schematic illustration of a third gas turbine plant comprising a liquid fuel supply system, a gaseous fuel supply system and an auxiliary medium supply system, wherein the auxiliary medium supply system comprises fluid lines which open into fluid lines of the gaseous fuel supply system.

FIG 1 shows schematically a first gas turbine plant 2a for generating electric power.

The gas turbine plant 2a comprises a compressor 4, an expander 6, a combustion system 8 and an electric generator 10. A drive shaft 12 connects the compressor 4 to the expander 6 such that the expander 6 can transfer a drive torque to the compressor 4. Furthermore, the gas turbine plant 2a comprises a clutch 14 via which the expander 6 is connectable to the electric generator 10 such that the expander 6 can drive the electric generator 10.

Aforementioned combustion system 8 comprises a combustion chamber 16, a first injection device 18 for injecting liquid fuel 20 into the combustion chamber 16 and a second injection device 22 for injecting gaseous fuel 24 into the combustion chamber 16. Both injection devices 18, 22 exhibit several fuel injection nozzles 26, 28, wherein the fuel injection nozzles 26 of the first injection device 18 are employed for injecting liquid fuel 20 into the combustion chamber 16 and the fuel injection nozzles 28 of the second injection device 22 are employed for injecting gaseous fuel 24 into the combustion chamber 16.

The compressor 4 is connected at its outlet side to the combustion chamber 16 via a first fluid duct 30 and the expander 6 is connected at its inlet side to the combustion chamber 16 via a second fluid duct 32.

Further, the gas turbine plant 2a comprises a liquid fuel supply system 34 and a gaseous fuel supply system 36, wherein the first injection device 18 is connected at its inlet side to the liquid fuel supply system 34 and the second injection device 22 is connected at its inlet side to the gaseous fuel supply system 36. The liquid fuel supply system 34 comprises several fluid lines 38 each of which is connected to one of the fuel injection nozzles 26 of the first injection device 18. Moreover, the gaseous fuel supply system 36 comprises several fluid lines 40 each of which is connected to one of the fuel injection nozzles 28 of the second injection device 22.

The liquid fuel supply system 34 exhibits a storage tank 42 in which liquid fuel 20, such as diesel, is stored, whereas the gaseous fuel supply system 36 is connected to a gas grid 44, particularly to a natural gas grid, of a gas supplier. Besides, the liquid fuel supply system 34 comprises several supply pumps 46 for pumping the liquid fuel 20 from said storage tank 42 to the first injection device 18. In the present embodiment, the liquid fuel supply system 34 exemplarily comprises one supply pump 46 per nozzle 26 of the first injection device 18.

In addition, the gas turbine plant 2a comprises an auxiliary medium supply system 48 which is connected to the inlet side of the first injection device 18. More precisely, the auxiliary medium supply system 48 comprises several fluid lines 50 each of which opens into one of the aforementioned fluid lines 38 of the liquid fuel supply system 34. Thus, each of these fluid lines 50 of the auxiliary medium supply system 48 is connected to one of the fuel injection nozzles 26 of the first injection device 18.

Also, the auxiliary medium supply system 48 exhibits a storage tank 52 in which an auxiliary medium 54 is stored. In the present embodiment, the auxiliary medium 54 is water. Thus, the auxiliary medium supply system 48 is a water supply system. In operation of the gas turbine plant 2a, the auxiliary medium 54 can be injected into the combustion chamber 16 via the first injection device 18 in order to increase the power being generated by the gas turbine plant 2a, for instance if the demand for power exceeds the power being generated by the gas turbine plant 2a.

Moreover, the auxiliary medium supply system 48 comprises several supply pumps 46 for pumping the auxiliary medium 54 from the last-mentioned storage tank 52 to the first injection device 18. In the present embodiment, the auxiliary medium supply system 48 exemplarily comprises one supply pump 46 per nozzle 26 of the first injection device 18.

Furthermore, each of the aforementioned fluid lines 38, 40, 50 exhibits a valve 56 for flow regulation.

In operation of the gas turbine plant 2a, air 58 is introduced into the compressor 4. The air 58 is compressed in the compressor 4 and conducted to the combustion chamber 16 of the combustion system 8 via the first fluid duct 30.

Fuel is injected directly into the combustion chamber 16 by means of the first or second injection device 18, 22 and is mixed with the compressed air 58. The mixture of air 58 and fuel is ignited by means of one or several (not depicted) burners of the combustion system 8, wherein a flame is formed and the fuel is burned within the combustion chamber 16. In the course of this, hot exhaust gas 60 is generated which is discharged from the combustion chamber 16 and conducted into the expander 6 via the second fluid duct 32.

The exhaust gas 60 drives the expander 6. In turn, the expander 6 drives the compressor 4 via aforementioned drive shaft 12. If the clutch 14 is in its closed state, the electric generator 10 is driven by the expander 6 as well so that the electric generator 10 produces electric energy.

The gas turbine plant 2a can be operated in liquid fuel mode, wherein the first injection device 18 is supplied with liquid fuel 20 by means of the liquid fuel supply system 34 and the liquid fuel 20 is injected into the combustion chamber 16 by means of the first injection device 18. Also, the gas turbine plant 2a can be operated in gaseous fuel mode, wherein the second injection device 22 is supplied with gaseous fuel 24 by means of the gaseous fuel supply system 36 and the gaseous fuel 24 is injected into the combustion chamber 16 by means of the second injection device 22.

During operation in gaseous fuel mode, the first injection device 18 can be supplied with the auxiliary medium 54 by means of the auxiliary medium supply system 48 and the auxiliary medium 54 can be injected into the combustion chamber 16 by means of the first injection device 18 if the power being generated by the gas turbine plant 2a is to be increased.

The auxiliary medium 54 can be injected into the combustion chamber 16 in liquid state or in gaseous state (possibly after being converted from liquid state into gaseous state by means of a not depicted evaporator of the auxiliary medium supply system 48).

The injection of the auxiliary medium 54 into the combustion chamber 16 results in an increased mass flow into the combustion chamber 16 and, thus, in an increased mass flow into the expander 6. Consequently, more power can be extracted from the expander 6. Furthermore, the injection of the auxiliary medium 54 into the combustion chamber 16 causes cooling of the flame so that more fuel is burned and NO_{X} production is reduced.

Moreover, the mass flow of the auxiliary medium 54 can be regulated in order to keep the power output of the expander 6 at a desired level and/or to keep the flame stable, particularly in terms of temperature.

As mentioned above, the auxiliary medium 54 is injected into the combustion chamber 16 by means of the first injection device 18. In other words, the first injection device 18 is used to introduce the auxiliary medium 54 into the combustion chamber 16. Therefore, the gas turbine plant 2a does not require a separate injection device (e.g. at the inlet side or the outlet side of the compressor 4) for introducing the auxiliary medium 54 into the combustion chamber 16. Hence, the structure of the gas turbine plant 2a has a low complexity and the gas turbine plant 2a can be produced cost-efficiently.

The subsequent description of further exemplary embodiments refers primarily to the differences as compared to the above-described exemplary embodiment. Where appropriate, same or equivalent components are denoted with same reference signs.

FIG 2 shows schematically a second gas turbine plant 2b for generating electric power.

In the present embodiment, the valves 56 of the fluid lines 38 of the liquid fuel supply system 34 are designed as directional valves 62. Each of these directional valves 62 is connected to one of the fluid lines 50 of the auxiliary medium supply system 48.

Depending on the spool position of the respective directional valve 62, either liquid fuel 20 or the auxiliary medium 54 can be conducted to the first injection device 18 through the respective directional valve 62.

Further, the fluid lines 50 of the auxiliary medium supply system 48 do not have own valves in the present embodiment. Thus, the gas turbine plant 2b from FIG 2 exhibits a lower number of valves 56 as compared to the gas turbine plant 2a from FIG 1. Consequently, the gas turbine plant 2b from FIG 2 may have a less complex control system (not depicted) for controlling components (such as the valves 56) of the gas turbine plant 2b as compared to the gas turbine plant 2a from FIG 1.

FIG 3 shows schematically a third gas turbine plant 2c for generating electric power.

In the present embodiment, the auxiliary medium supply system 48 is connected to the second injection device 22 (rather than to the first injection device 18). More precisely, each of the fluid lines 50 of the auxiliary medium supply system 48 opens into one of the fluid lines 40 of the gaseous fuel supply system 36. Thus, each of the fluid lines 50 of the auxiliary medium supply system 48 is connected to one of the fuel injection nozzles 28 of the second injection device 22.

Furthermore, an inert gas, such as helium or nitrogen, is used as the auxiliary medium 54 in the present embodiment.

Thus, the auxiliary medium supply system 48 is an inert gas supply system in the present case. Alternately, steam (i.e. water vapour) could be used as the auxiliary medium 54 in the gas turbine plant 2c.

During operation in liquid fuel mode, the second injection device 22 can be supplied with the auxiliary medium 54 by means of the auxiliary medium supply system 48 and the auxiliary medium 54 can be injected into the combustion chamber 16 by means of the second injection device 22 if the power being generated by the gas turbine plant 2c is to be increased.

While specific embodiments of the invention have been described in detail, those with ordinary skill in the art will appreciate that various modifications and alternatives to those details could be developed in light of the overall teachings of the disclosure. Accordingly, the particular embodiments disclosed are meant to be illustrative only and should not be construed as limiting the scope of the appended claims.

## Claims

1. Gas turbine plant (2a, 2b, 2c) comprising a combustion system (8), a gaseous fuel supply system (36) and a liquid fuel supply system (34), wherein the combustion system (8) exhibits a combustion chamber (16), a first injection device (18) for injecting liquid fuel (20) into the combustion chamber (16) and a second injection device (22) for injecting gaseous fuel (24) into the combustion chamber (16), and wherein the first injection device (18) is connected to the liquid fuel supply system (34) and the second injection device (22) is connected to the gaseous fuel supply system (36),
**characterised by** an auxiliary medium supply system (48) which is connected to at least one of the two injection devices (18, 22).

2. Gas turbine plant (2a, 2b, 2c) according to claim 1,
**characterised in that** the liquid fuel supply system (34) comprises a storage tank (42) for storing liquid fuel (20).

3. Gas turbine plant (2a, 2b, 2c) according to claim 1 or 2,
**characterised in that** the gaseous fuel supply system (36) is connected to a gas grid (44).

4. Gas turbine plant (2a, 2b, 2c) according to any of the preceding claims,
**characterised in that** the first injection device (18) comprises several fuel injection nozzles (26) for injecting liquid fuel (20) into the combustion chamber (16) and the second injection device (22) comprises several fuel injection nozzles (28) for injecting gaseous fuel (24) into the combustion chamber (16), wherein the respective fuel injection nozzle (26) of the first injection device (18) is connected at its inlet side to the liquid fuel supply system (34) and the respective fuel injection nozzle (28) of the second injection device (22) is connected at its inlet side to the gaseous fuel supply system (36).

5. Gas turbine plant (2a, 2b) according to any of the preceding claims,
**characterised in that** the auxiliary medium supply system (48) is connected to the first injection device (18).

6. Gas turbine plant (2c) according to any of the preceding claims,
**characterised in that** the auxiliary medium supply system (48) is connected to the second injection device (22).

7. Gas turbine plant (2a, 2b) according to any of the preceding claims,
**characterised in that** the liquid fuel supply system (34) comprises a fluid line (38) for conducting liquid fuel (20) which is connected to the first injection device (18) and the auxiliary medium supply system (48) comprises a fluid line (50) which is connected to said fluid line (38) of the liquid fuel supply system (34), particularly opens into said fluid line (38) of the liquid fuel supply system (34).

8. Gas turbine plant (2c) according to any of the preceding claims,
**characterised in that** the gaseous fuel supply system (36) comprises a fluid line (40) for conducting gaseous fuel (24) which is connected to the second injection device (22) and the auxiliary medium supply system (48) comprises a fluid line (50) which is connected to said fluid line (40) of the gaseous fuel supply system (36), particularly opens into said fluid line (40) of the gaseous fuel supply system (36).

9. Gas turbine plant (2b) according to any of the preceding claims,
**characterised in that** at least one of the two fuel supply systems (34, 36) comprises a directional valve (62) to which a fluid line (50) of the auxiliary medium supply system (48) is connected.

10. Method for operating a gas turbine plant (2a, 2b, 2c) according to any of the preceding claims, in which
- fuel (20, 24) is injected into the combustion chamber (16) by means of one of the two injection devices (18, 22) and said fuel (20, 24) is burned within the combustion chamber (16) in order to generate power by the gas turbine plant (2a, 2b, 2c) and
- the other injection device (18, 22) is supplied with an auxiliary medium (54) by means of the auxiliary medium supply system (48) and the auxiliary medium (54) is injected into the combustion chamber (16) by means of the latter injection device (18, 22) in order to increase the power being generated by the gas turbine plant (2a, 2b, 2c).

11. Method according to claim 10,
**characterised in that** the injection device (18, 22) which is used to inject the auxiliary medium (54) into the combustion chamber (16) injects the auxiliary medium (54) directly into the combustion chamber (16).

12. Method according to claim 10 or 11,
**characterised in that** the fuel (24) is injected into the combustion chamber (16) by means of the second injection device (22) and the auxiliary medium (54) is injected into the combustion chamber (16) by means of the first injection device (18), wherein the fuel (24) is a gaseous fuel, such as natural gas.

13. Method according to claim 10 or 11,
**characterised in that** the fuel (20) is injected into the combustion chamber (16) by means of the first injection device (18) and the auxiliary medium (54) is injected into the combustion chamber (16) by means of the second injection device (22), wherein the fuel (20) is a liquid fuel, such as kerosene or diesel.

14. Method according to any of the claims 10 to 13,
**characterised in that** the auxiliary medium (54) is water.

15. Method according to any of the claims 10 to 13,
**characterised in that** the auxiliary medium (54) is an inert gas, such as helium or nitrogen.
